# EUROPÄISCHE PATENTANMELDUNG

(11) **EP 4 145 243 A1**
(43) Veröffentlichungstag der Anmeldung: **08.03.2023**
(21) Anmeldenummer: 21194352.7
(22) Anmeldetag: 01.09.2021
(51) Int. Cl.: G05D 23/19

(54) **VERFAHREN UND SYSTEM ZUR STEUERUNG VON LASTEN IN EINEM GEBÄUDE**

(71) Anmelder: MeteoViva GmbH, 52428 Jülich (DE); Rheinisch-Westfälische Technische Hochschule (RWTH) Aachen, 52062 Aachen (DE)
(72) Erfinder: Blum, Jonas, 52428 Jülich (DE); Hardt, Stefan, 52428 Jülich (DE); Richter, Pascal, 52074 Aachen (DE); Ábráham, Erika, 52074 Aachen (DE); Abida, Ahmed, 52070 Aachen (DE); Klemp, Simon, 53359 Rheinbach (DE)
(74) Vertreter: dompatent von Kreisler Selting Werner - Partnerschaft von Patent- und Rechtsanwälten mbB

(57) **Zusammenfassung**

Die Erfindung betrifft ein Verfahren (10) zur Steuerung von Lasten in einem Gebäude, insbesondere von Heizungsanlagen, Klimaanlagen und Lüftungsanlagen, wobei das Verfahren die nachfolgenden Schritte aufweist:
- Ermitteln von Gebäudedaten für ein zu steuerndes Gebäude (12);
- Ermitteln von Gebäudemodellparametern für ein digitales Gebäudemodell (14); wobei das Ermitteln der Gebäudemodellparameter den Einsatz eines vorab mit Trainingsdaten trainierten Klassifikators umfasst und der Klassifikator dazu ausgelegt ist, in Abhängigkeit von den ermittelten Gebäudedaten die Gebäudemodellparameter zu bestimmten;
- Steuerung der Lasten in dem Gebäude in Abhängigkeit von dem ermittelten Gebäudemodell (16).

## Beschreibung

Die vorliegende Erfindung betrifft ein Verfahren und ein System zur Steuerung von Lasten in einem Gebäude, insbesondere zur Steuerung von Heizungsanlagen, Klimaanlagen und Lüftungsanlagen in einem Gebäude, wobei für die Steuerung der Lasten ein digitales Gebäudemodell eingesetzt wird.

Die Steuerung von Lasten in Gebäuden unter Verwendung digitaler Gebäudemodelle ist im Allgemeinen bekannt. Dabei wird zunächst ein digitales Gebäudemodell für ein zu steuerndes Gebäude bzw. für eine Gebäudezone erstellt. Das digitale Gebäudemodell stellt dabei ein virtuelles Abbild eines Gebäudes (oder entsprechend einer Gebäudezone) dar, welches erlaubt, die Zustände in einem Gebäude oder einem Bereich des Gebäudes zu berechnen. Ein digitales Gebäudemodell wird daher auch häufig als digitaler Zwilling eines realen Gebäudes angesehen. Das digitale Gebäudemodell erlaubt es, im Voraus zu berechnen, wie sich die Einstellungen einzelner Lasten und äußere Wettereinflüsse auf das Raumklima und den Energieverbrauch in einem Gebäude auswirken. In Abhängigkeit von den bereitgestellten Voraussagen kann die Steuerung der einzelnen Lasten derart erfolgen, dass vorgegebene Raumzustände in dem zu steuernden Gebäude eingestellt werden können, sodass die Anforderungen des vorgegebenen Raumklimakomforts erfüllt werden.

Bislang erfolgt die Erstellung eines Gebäudemodells und die Bestimmung der Gebäudemodellparameter manuell. Die Erstellung eines Gebäudemodells, welches die Realität möglichst genau abbildet, ist daher als besonders zeit- und kostenaufwendig anzusehen.

Ausgehend von dieser Problematik ist es Aufgabe der vorliegenden Erfindung, ein Verfahren sowie ein System zur Steuerung von Lasten in einem Gebäude bereitzustellen, bei dem die Erstellung des Gebäudemodells automatisiert und dadurch zeit- und kosteneffizient erfolgt.

Zur Lösung der vorstehend genannten Aufgabe wird mit der vorliegenden Erfindung ein Verfahren zur Steuerung von Lasten in einem Gebäude, insbesondere von Heizungsanlagen, Klimaanlagen und Lüftungsanlagen, vorgeschlagen, wobei das Verfahren die nachfolgenden Schritte aufweist:
- Ermitteln relevanter Gebäudedaten für ein zu steuerndes Gebäude;
- Ermitteln von Gebäudemodellparametern für ein digitales Gebäudemodell; wobei das Ermitteln der Gebäudemodellparameter den Einsatz eines vorab mit Trainingsdaten trainierten Klassifikators umfasst und wobei der Klassifikator dazu ausgelegt ist, in Abhängigkeit von den ermittelten Gebäudedaten die Gebäudemodellparameter zu bestimmten;
- Steuerung der Lasten in dem Gebäude in Abhängigkeit von dem ermittelten Gebäudemodell.

Der Einsatz des zuvor mit Trainingsdaten trainierten Klassifikators erlaubt eine besonders effiziente Erstellung des Gebäudemodells. Durch den Einsatz des Klassifikators kann auf Gebäudemodelle zurückgegriffen werden, die in der Vergangenheit für spezifische Gebäude manuell (oder auch automatisiert) erstellt wurden. Bei dem erfindungsgemäßen Verfahren können bereits vorliegende Gebäudedaten, die beispielsweise im Zusammenhang mit 100 oder 1.000 Gebäuden erstellt wurden, zum Trainieren des Klassifikators verwendet werden, sodass der Klassifikator die Gebäudeparameter in automatisierter Weise bestimmen kann, und zwar in Abhängigkeit der Ähnlichkeit des zu steuernden Gebäudes mit den Gebäuden, für die in der Vergangenheit ein Gebäudemodell erstellt wurde (nachfolgend auch als kalibrierte Gebäude bezeichnet). Die Ermittlung der Ähnlichkeit des zu steuernden Gebäudes mit den kalibrierten Gebäuden erfolgt insbesondere über einen Vergleich der Gebäudedaten des zu steuernden Gebäudes und der kalibrierten Gebäude und insbesondere über die Ermittlung der Ähnlichkeit dieser Gebäudedaten.

Auch wenn im Rahmen der vorliegenden Erfindung meist vereinfacht von Lasten in einem Gebäude sowie von Gebäudedaten und Gebäudemodellparametern die Rede ist, so ist es für den Fachmann erkennbar, dass damit auch Lasten in einer Gebäudezone sowie Gebäudezonendaten und Gebäudezonenmodellparameter umfasst sind. Anders ausgedrückt, beschränkt sich das erfindungsgemäße Verfahren nicht ausschließlich auf die Steuerung von Lasten in einem gesamten Gebäude, sondern umfasst auch die Steuerung von Lasten in einer oder mehreren einzelnen Gebäudezonen.

Gemäß einer Ausführungsform des erfindungsgemäßen Verfahrens kann vorgesehen sein, dass das Ermitteln der Gebäudedaten das Ermitteln von Bauphysikdaten, Geometriedaten, Anlagetechnikdaten und/oder Thermodynamikdaten umfasst. Bei den Bauphysikdaten gemäß der vorliegenden Erfindung handelt es sich um Daten des Modells, die beispielsweise Wärmekapazitäten, Wärmeleitfähigkeit und/oder Dichten enthalten. Die Geometriedaten im Rahmen der Erfindung können beispielsweise Daten zu Flächen und Orientierung von Gebäudeteilen oder Gebäudezonenbauteilen umfassen. Die Geometriedaten können insbesondere Daten zu Flächen von Fenstern, Wänden, Dächern und/oder Böden enthalten. Auch können die Geometriedaten Daten zu der Anzahl der vorhandenen Fenster umfassen. Ferner können die Anlagentechnikdaten beispielsweise Daten betreffend Nennleistungen, Betriebscharakteristiken, Materialinformationen, Medieninformationen (z. B. Luft, Wasser, etc.) und/oder Typinformationen umfassen. Die Thermodynamikdaten hingegen können beispielsweise Daten zu Wärme, Volumenstrom, Massenstrom, Druck und/oder Temperatur umfassen. Bei dem erfindungsgemäßen Verfahren kann der Klassifikator insbesondere mit Bauphysikdaten und/oder Geometriedaten trainiert sein, sodass der Klassifikator bei Vorgabe der Bauphysikdaten und/oder Geometriedaten Gebäudemodellparameter, die in der Vergangenheit für ähnliche Gebäude bzw. Gebäudezonen verwendet wurden, ermitteln kann. Auch kann der Klassifikator mit Anlagetechnikdaten und/oder Thermodynamikdaten trainiert sein, sodass der Klassifikator bei Vorgabe dieser Daten automatisch geeignete Gebäudemodellparameter bestimmen kann.

Gemäß einer Ausführungsform der Erfindung kann vorgesehen sein, dass das Ermitteln der Gebäudedaten eine Auswertung einer Benutzereingabe umfasst. Bei dieser Ausführungsform werden die Gebäudedaten also manuell durch den Benutzer eingegeben und anschließend durch den zuvor trainierten Klassifikator ausgewertet. Gemäß einer anderen Ausfügungsform der Erfindung kann es vorgesehen sein, dass die Gebäudedaten automatisch erfasst werden, wie nachfolgend noch im Detail beschrieben wird.

Gemäß einer Ausführungsform der Erfindung kann vorgesehen sein, dass das Ermitteln der Gebäudedaten das Ermitteln von Thermodynamikdaten umfasst und dass das Ermitteln der Thermodynamikdaten die Messung einer Temperatur, einer Feuchtigkeit, eines Druckes und/oder eines Volumenstromes in einem Gebäudeteil umfasst.

Auch kann vorgesehen sein, dass das Ermitteln der Gebäudedaten das Ermitteln von Geometriedaten umfasst und dass das Ermitteln der Geometriedaten das Scannen eines Gebäudeteils und/oder die Aufnahme einer photographischen Abbildung eines Gebäudeteils umfasst. Beispielsweise kann hierzu eine photographische Aufnahme von einem Gebäude oder einer Gebäudewand erstellt werden und anschließend die Aufnahme ausgewertet werden. Aus der photographischen Aufnahme können Informationen zur Größe des Gebäudes, zur Anzahl der Etagen und zur Anzahl und Größe der Fenster abgeleitet werden. Durch Einspeisen der Aufnahme in den zuvor mit Aufnahmen trainierten Klassifikator können geeignete Gebäudemodellparameter automatisiert ermittelt werden. Dabei kann der Klassifikator zuvor mit entsprechenden Trainingsdaten trainiert worden sein. Die Trainingsdaten können beispielsweise Aufnahmen sowie den Aufnahmen zugeordnete Gebäudemodellparameter aufweisen. Alternativ kann es aber auch vorgesehen sein, dass zunächst aus den Aufnahmen einzelne Merkmale extrahiert werden, die für die anschließende Klassifizierung des zu steuernden Gebäudes verwendet werden. Dabei kann der Klassifikator entsprechend mit Trainingsdaten trainiert sein, wobei die Trainingsdaten spezifische Merkmale (z.B. Anzahl der Etagen, Anzahl der Fenster, Größe der Fenster, Farbe der Außenwand, etc.) aufweisen und Gebäudemodellparameter, die den Merkmalen oder Merkmalskombinationen zugeordnet sind. Auf diese Weise kann der Klassifikator zunächst erlernen, welche Gebäudemodellparameter für welche Gebäude geeignet sind.

Anschließend kann eine automatisierte Ermittlung der Gebäudemodellparameter erfolgen, indem die Merkmale der zu steuernden Gebäudes mit den Merkmalen der kalibrierten Gebäude verglichen werden.

Ferner kann gemäß der vorliegenden Erfindung vorgesehen sein, dass die Geometriedaten manuell durch einen Benutzer vorgegeben werden. Der Klassifikator kann dann in Abhängigkeit von den Geometriedaten und Messdaten des Gebäudes die Gebäudemodellparameter automatisiert ermitteln.

Alternativ kann vorgesehen sein, dass die Geometriedaten automatisch über eine BIM-Schnittstelle (Building Information Modelling) oder über eine Schnittstelle zu einer 3D Geoweb Datenplattform ermittelt werden.

Gemäß einer weiteren Ausführungsform der Erfindung kann vorgesehen sein, dass das Ermitteln der Gebäudedaten sowohl das Ermitteln von Bauphysikdaten als auch von Geometriedaten umfasst. Ausgehend von den Bauphysikdaten und den Geometriedaten kann der Klassifikator geeignete Gebäudemodellparameter ermitteln, wobei das Ermitteln der Gebäudemodellparameter in Abhängigkeit von der Ähnlichkeit der Bauphysikdaten und der Geometriedaten des zu steuernden Gebäudes mit den Gebäuden erfolgt, für die in der Vergangenheit bereits digitale Gebäudemodelle erstellt wurden. Beispielsweise kann dabei vorgesehen sein, dass die Bauphysikdaten und die Geometriedaten durch die Auswertung einer Benutzereingabe ermitteln werden. Alternativ kann vorgesehen sein, dass die Bauphysikdaten manuell eingegeben werden und dass die Geometriedaten - wie vorstehend beschrieben - automatisch ermittelt werden.

Der im Rahmen der vorliegenden Erfindung verwendete Klassifikator basiert auf einem Verfahren zum Maschinellen Lernen (im Englischen auch als Machine Learning bezeichnet) und kann insbesondere auf einem künstlichen neuronalen Netz (im Englischen auch als Artificial Neural Network bezeichnet) und/oder auf statistischen Verfahren des maschinellen Lernens wie beispielsweise Modell basiertes Clustering (im Englischen auch als Model based clustering bezeichnet), Netz basiertes Clustering (im Englischen auch als Grid based Clustering bezeichnet), Dichte basiertes Clustering (im Englischen auch als Density based clustering bezeichnet), hierarchisches Clustering (im Englischen auch als hierarchical clustering bezeichnet), partitionelles Clustering (im Englischen auch als partitional clustering bezeichnet), einer Stützvektormethode (im Englischen auch als Support Vector Machine bezeichnet), oder einer Hauptkomponentenanalyse (im Englischen auch als Principal Component Analysis bezeichnet) basieren.

Gemäß einer Ausführungsform der Erfindung kann vorgesehen sein, dass das Ermitteln von Gebäudemodellparametern zunächst das Ermitteln mehrerer Gebäudemodellparameterwerte für einen Gebäudemodellparameter umfasst und die ermittelten Gebäudeparameterwerte dazu verwendet werden, in einem vorgegebenen Zeitraum die Modellgüte des Gebäudemodells zu bestimmen. Dadurch wird also in einem vorgegebenen Zeitraum, der auch als Kalibrierungszeitraum bezeichnet werden kann, bestimmt, wie präzise das ermittelte digitale Gebäudemodell die Zustände in dem zu steuernden Gebäude wiedergibt. Der Kalibrierungszeitraum kann dabei beispielsweise mehrere Stunden, einen Tag oder mehrere Tage betragen.

Auch kann vorgesehen sein, dass das Ermitteln der Gebäudeparameter das Ermitteln eines Gebäudeparameterwertebereiches und/oder das Ermitteln eines Initialwertes umfasst.

Ferner kann im Rahmen der vorliegenden Erfindung vorgesehen sein, dass das Ermitteln der Gebäudemodellparameter für ein Gebäudemodell die Maximierung einer Modellgüte des Gebäudemodells hinsichtlich mindestens eines Raumzustandes für den vorgegebenen Zeitraum (Kalibrierungszeitraum) umfasst.

Weiterhin kann vorgesehen sein, dass die Gebäudemodellparameter freigegeben werden, sofern die Modellgüte größer ist als ein vorgegebener Modellgütegrenzwert. Dadurch kann die Kalibrierung des digitalen Gebäudemodells so lange fortgesetzt werden, bis eine gewünschte Modellgüte erreicht ist.

Auch kann bei dem erfindungsgemäßen Verfahren vorgesehen sein, dass bei der Bestimmung der Modellgüte Wetterdaten und Messdaten für einen Raumzustand verwendet werden.

Zudem wird zur Lösung der eingangs beschriebenen Aufgabe ein System zur Steuerung von Lasten in einem Gebäude, insbesondere von Heizungsanlagen, Klimaanlagen und Lüftungsanlagen, vorgeschlagen, wobei das System Folgendes aufweist:
- eine Servervorrichtung mit einer Recheneinheit, einer Speichereinheit und einem Kommunikationsmodul; und
- eine Clientvorrichtung mit einer Recheneinheit, einer Speichereinheit und einem Kommunikationsmodul; wobei
- die Clientvorrichtung dazu eingerichtet ist, Gebäudedaten zu ermitteln und für die Servervorrichtung bereitzustellen; und
- die Servervorrichtung dazu eingerichtet ist, einen Klassifikator bereitzustellen, der mit Trainingsdaten trainiert ist und dazu ausgelegt ist, in Abhängigkeit von den empfangenen Gebäudedaten mindestens einen Gebäudemodellparameter für ein digitales Gebäudemodell zu ermitteln, wobei die Servervorrichtung dazu eingerichtet ist, Steuerdaten für die Steuerung der Lasten in dem Gebäude in Abhängigkeit von dem Gebäudemodell zu erzeugen und an die Clientvorrichtung zu senden.

Die Clientvorrichtung kann die ermittelten Gebäudedaten für die Servervorrichtung bereitstellen, wobei die Servervorrichtung unter Verwendung des trainierten Klassifikators und der empfangenen Gebäudedaten ein digitales Modell erstellen kann. Dabei kann die Clientvorrichtung die Gebäudedaten aktiv an die Servervorrichtung senden. Dies kann beispielsweise über eine drahtlose Übertragungstechnik erfolgen. Alternativ kann die Servervorrichtung die Gebäudedaten bei Bedarf von der Clientvorrichtung abrufen. Der Klassifikator nutzt Ähnlichkeiten des zu steuernden Gebäudes mit denjenigen Gebäuden, für die in der Vergangenheit bereits ein digitales Gebäudemodell erstellt wurde (= kalibrierte Gebäude). Insbesondere können dabei Geometriedaten und Anlagentechnikdaten verwendet werden, wobei ein digitales Modell geschätzt werden kann, das sich bereits bei ähnlichen Gebäuden bewährt hat. Das erfindungsgemäße System kann dabei dazu ausgelegt sein, die vorstehend beschriebenen Schritte des erfindungsgemäßen Verfahrens durchzuführen. Dabei erfolgen die Verfahrensschritte zum Ermitteln der relevanten Gebäudedaten clientseitig, während die Verfahrensschritte zum Ermitteln der Gebäudemodellparameter und zur Erzeugung der Steuersignale serverseitig erfolgen.

Gemäß einer Ausführungsform des erfindungsgemäßen Systems kann vorgesehen sein, dass die Clientvorrichtung eine Messvorrichtung zur Aufnahme von Messdaten aufweist. Insbesondere kann die Clientvorrichtung eine Messvorrichtung zur Aufnahme einer Temperatur, einer Feuchtigkeit oder eines Druckes in einem Gebäude oder einem Gebäudeteil oder zur Aufnahme einer photographischen Abbildung oder geometrischer Daten eines Gebäudeteils aufweisen. Entsprechend kann die Clientvorrichtung einen Temperatursensor, einen Feuchtigkeitssensor, einen Drucksensor, eine Kamera und/oder einen Laserscanner aufweisen. Die von der Clientvorrichtung aufgenommenen Gebäudedaten werden für die Servervorrichtung bereitgestellt, sodass die Servervorrichtung unter Verwendung des Klassifikators geeignete Gebäudemodellparameter ermitteln kann.

Die vorliegende Erfindung wird nachfolgend anhand der Figuren veranschaulicht. Dabei zeigen die
- Fig. 1: ein Ausführungsbeispiel des erfindungsgemäßen Verfahrens,
- Fig. 2: ein Beispiel für eine automatisierte Gebäudemodellkalibrierung unter Verwendung einer Datenbank,
- Fig. 3: ein Beispiel für eine Clusterbildung,
- Fig. 4: ein beispielhaftes Schaubild für eine automatisierte Gebäudemodellkalibrierung und
- Fig. 5: Kalibrierungsergebnisse vor und nach einer Kalibrierung.

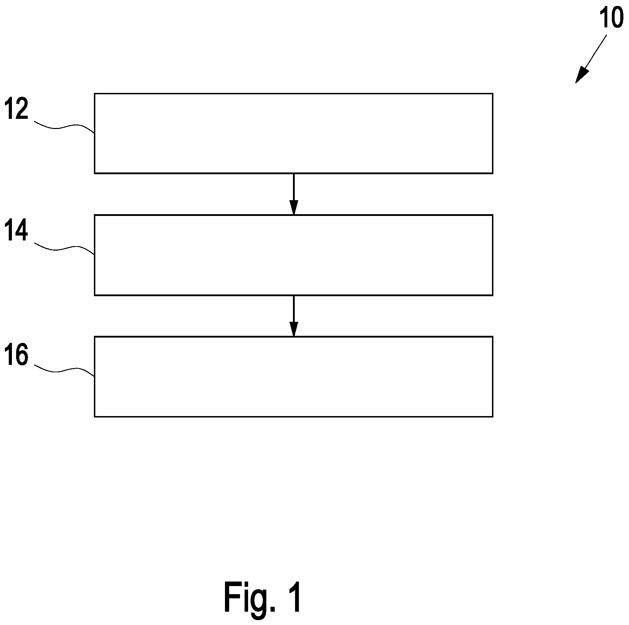

In der Fig. 1 ist ein Schaubild für ein Ausführungsbeispiel des erfindungsgemäßen Verfahrens 10 dargestellt. Bei dem erfindungsgemäßen Verfahren werden in einem ersten Verfahrensschritt 12 Gebäudedaten für ein zu steuerndes Gebäude ermittelt. Diese können insbesondere durch Messung der Gebäudedaten (insbesondere der Geometriedaten), beispielsweise unter Verwendung einer Kamera oder eines Scanners, oder aber auch durch eine Benutzereingabe oder automatisch über eine BIM-Schnittstelle (Building Information Modelling) oder über eine Schnittstelle zu einer 3D Geoweb Datenplattform ermittelt werden. Anschließend werden in einem zweiten Verfahrensschritt 14 Gebäudemodellparameter für ein digitales Gebäudemodell ermittelt. Dabei wird ein Klassifikator verwendet, der zuvor mit den Daten von Gebäuden trainiert wurde, für die in der Vergangenheit geeignete Gebäudemodelle erstellt wurden (= kalibrierte Gebäude). Je größer der Datensatz, mit dem der Klassifikator trainiert wurde, desto präziser ist das durch das Verfahren ermittelte digitale Gebäudemodell. Beim Training des Klassifikators können beispielsweise die Daten von 100, 1.000 oder 10.000 Gebäuden verwendet werden.

Bei der Ermittlung der Gebäudemodellparameter unter Verwendung des Klassifikators prüft dieser, ob in dem Datensatz Gebäude enthalten sind, die eine gewisse Ähnlichkeit mit dem zu steuernden Gebäude aufweisen und ermittelt entsprechend geeignete Gebäudemodellparameter. Dabei kann ein Gebäudemodellparameterbereich ermittelt werden, innerhalb dessen die Gebäudemodellparameter variiert werden können, um zu ermitteln, welche Gebäudemodellparameterwerte ein optimales virtuelles Abbild des Gebäudes erlauben. Nachdem das digitale Modell ermittelt ist, können die Lasten in dem Gebäude unter in Abhängigkeit von dem ermittelten Gebäudemodell gesteuert werden (Verfahrensschritt 16).

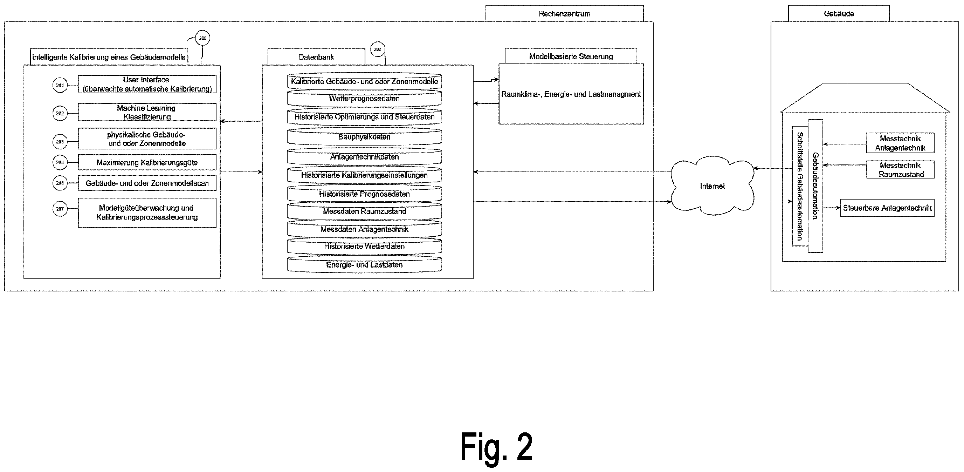

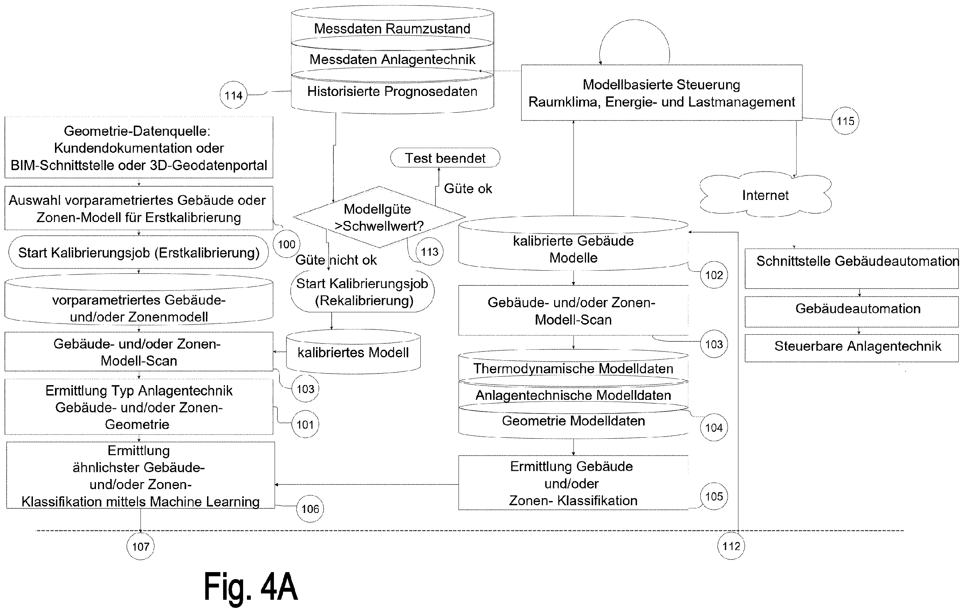

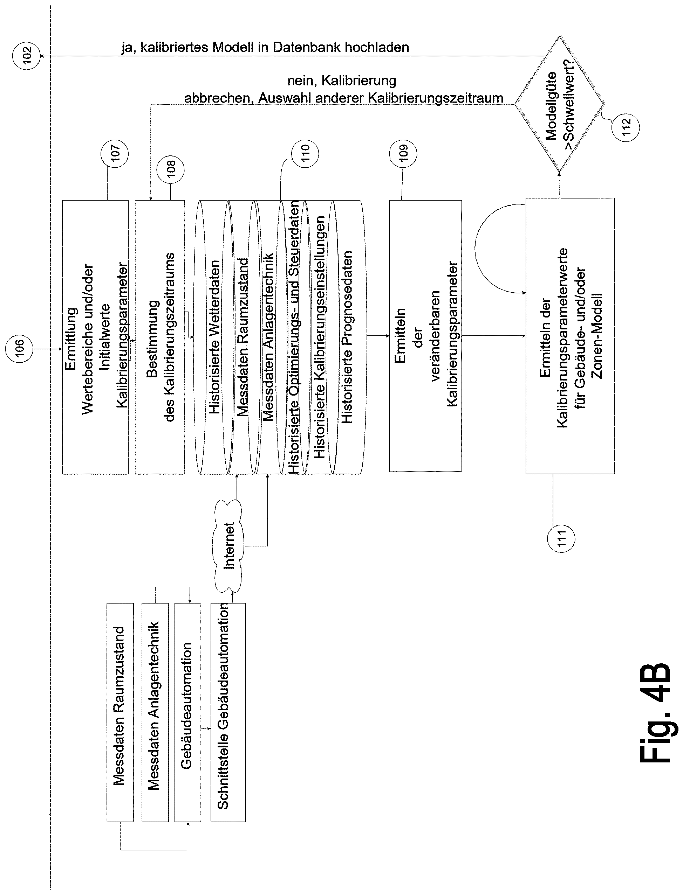

In den Fign. 2 und 4 sind ein Beispiel für eine automatisierte Gebäudemodellkalibrierung unter Verwendung einer Datenbank sowie ein beispielhaftes Schaubild für eine automatisierte Gebäudemodellkalibrierung dargestellt.

Wie in den Figuren beispielhaft dargestellt ist, kann beispielsweise ein User Interface 201 vorgesehen sein, sodass das Verfahren in einem von Menschen überwachten, in einem human-in-the-loop-Modus oder in einem vollautomatischen Modus ausgeführt werden kann. Der überwachte Modus bietet sich an, wenn das Gebäude- und/oder Gebäudezonenmodell erstmalig kalibriert wird. Folgende Auswahlmöglichkeiten können optional für den Nutzer implementiert sein:
- Auswahl des Gebäudemodells 100
- Auswahl des Kalibrierungszeitraumes 108
- Start eines Kalibrierungsjobs. Es können das Gebäudemodell, Messdaten Raumzustände, Messdaten anlagentechnischer Zustände, historisierte Wetterdaten, historisierte Prognosedaten Wetter, historisierte Prognosedaten Gebäudemodelle, historisierte Prognosedaten Anlagenfahrpläne/Steuerdaten, historisierte Optimierungsdaten, historisierte Kalibrierungseinstellungsdaten im Kalibrierungszeitraum auf einer Servervorrichtung hinterlegt und von einer Clientvorrichtung heruntergeladen werden.
- Gebäudezonenmodellauswahl- User Interface, wobei ein oder mehrere Zonenmodelle eines digitalen Gebäudemodells für die Kalibrierung ausgewählt werden können.
- Kalibrierungsparameter- User Interface zur Überprüfung der automatisch ermittelten veränderbaren Kalibrierungsparameter 109, wobei ein oder mehrere Kalibrierungsparameter manuell aktiviert oder deaktiviert werden können, wobei Wertebereiche eines oder mehrerer Kalibrierungsparameter oder von Kalibrierungsparametergruppen verändert werden können.
- Kalibrierungsergebnis- User Interface zur Überprüfung der automatisch ermittelten Kalibrierungsparameterwerte, wobei gute Gebäudezonenkalibrierungsergebnisse übernommen werden können und nicht ausreichend gute Gebäudezonenkalibrierungsergebnisse verworfen werden können, wenn das Gebäudemodell aus mehr als einer Zone besteht.

Mittels Gebäude- und/oder Zonenmodell-Scan-Modul 206 können die Geometriedaten und/oder Anlagentechnikdaten aus dem zu kalibrierenden Modell extrahiert 101 werden. In Modul 206 werden aus allen bereits in der Datenbank 205 kalibrierten Gebäude- und/oder Gebäudezonenmodellen Geometriedaten und/oder Anlagentechnikdaten und/oder Thermodynamikdaten und/oder Bauphysikdaten extrahiert 103 und somit für die weitere Verarbeitung vorbereitet. Diese Daten werden nach Abschluss des Modellscans in der zentralen Datenbank 205 gespeichert 104.

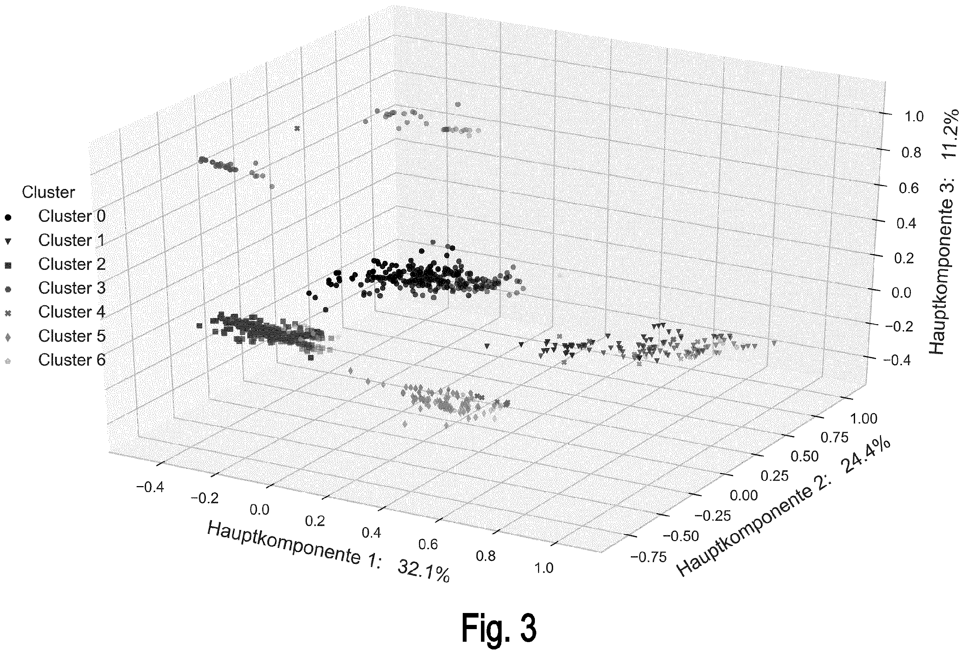

Mittels Machine Learning Modul 202 wird die Gebäude- und/oder Zonenmodell-Klassifikation 105 hinsichtlich Geometriedaten und/oder Anlagentechnikdaten ausgeführt. Aus den vorhandenen Flächeninformationen werden insbesondere Verhältnisse aus verschiedenen Geometriedaten gebildet, beispielsweise das Verhältnis der Bodenfläche zum Luftvolumen des Gebäudemodells und/oder das Verhältnis aus Fensterfläche zur Außenwandfläche und/oder das Verhältnis der Dachfläche zur Bodenfläche und/oder das Verhältnis eines Glasdachs zu Bodenflächen und/oder das Verhältnis von innenliegenden Wandflächen zu Bodenflächen. So können beispielsweise geometrische Gebäudezonenmodell-Cluster gebildet werden, die innenliegende Gebäudebereiche repräsentieren und Gebäudezonenmodell-Cluster, welche die obersten bzw. die untersten Etagen im Gebäude beinhalten und Gebäudezonenmodell-Cluster, die hohe Fenster und Raumhöhen haben und Gebäudezonenmodell-Cluster, die hohe thermische Speichermassen haben, und Gebäudezonenmodell-Cluster, die Eingangsbereiche/Atrien mit Glasdächern beinhalten. Die Anlagentechnik kann beispielsweise nach vorhandenen Systemtypen klassifiziert werden. Das können beispielsweise Betonkerntemperierungssysteme, Lüftungsanlagen oder Heizkörper sein. In der Fig. 3 ist ein Beispiel einer Zonenmodell-Clusterberechnung gezeigt.

Die Geometriedaten und/oder Anlagentechnikdaten des zu kalibrierenden Gebäude- und/oder Gebäudezonenmodells werden genutzt, um den am besten geeigneten Cluster bestimmen zu können, ebenso kann die ähnlichste Zone bestimmt werden 106.

Aus den besten Clustern oder einer oder mehrerer ähnlichsten Zonenmodelle können beispielsweise zulässige Wertebereiche und/oder Initialwerte für die Kalibrierungsparameter ermittelt werden 107.

Ist der Kalibrierungszeitraum vorgegeben 108, so können die Daten der Datenbank in Bezug auf Gebäudebetriebsfälle analysiert werden, um die veränderbaren Kalibrierungsparameter zu ermitteln 109. Wurde beispielsweise kein aktiver Anlagentechnikbetrieb festgestellt, so werden nur Kalibrierungsparameter der Bauphysik als veränderbar gekennzeichnet. Technisch können alle Parameter oder Parametergruppen oder einzelne Parameter als veränderbar gekennzeichnet werden. Ebenso kann es beispielsweise vorteilhaft sein, wenn nur eine von mehreren Anlagen innerhalb eines Gebäudes oder einer Zone aktiv war, die Parameter dieser Anlage zusammen mit den Parametern der Bauphysik zu kalibrieren.

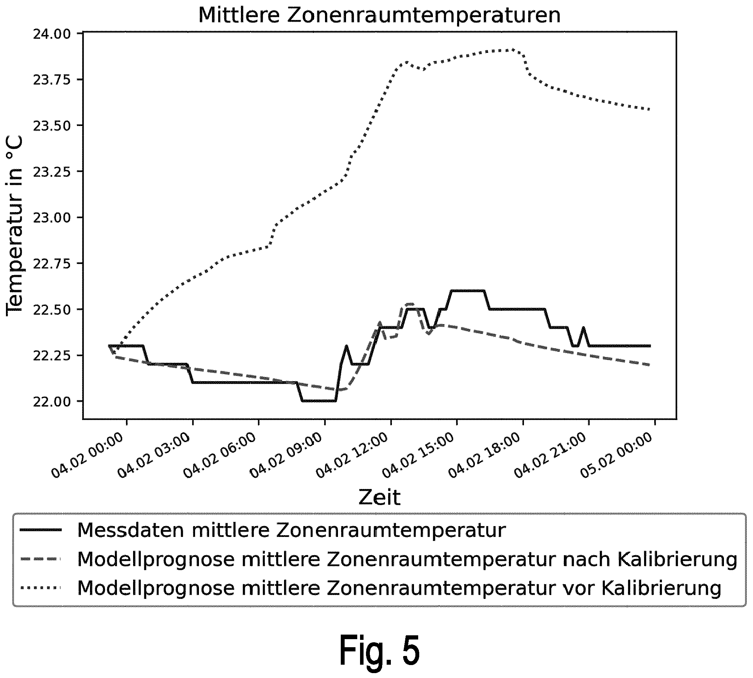

Modul 203 beinhaltet eine Simulationsumgebung des Gebäudemodells, Modul 204 beinhaltet einen Algorithmus zur Maximierung der Modellgüte. Modul 203 und Modul 204 können für die Ermittlung der Kalibrierungsparameterwerte 111 und für die Berechnung der Modellgüte 112 verwendet werden. Der Algorithmus 204 benutzt einen Optimierungsalgorithmus. In der Fig. 5 ist ein Ergebnis einer automatischen Kalibrierung gezeigt, wobei die Modellgüte vor und nach der automatischen Kalibrierung dargestellt ist.

Ist die Modellgüte nach der automatischen Kalibrierung hoch genug bzw. höher als ein vorgegebener Schwellwert 112, so wird das Gebäude- und/oder Zonenmodell in die Datenbank hochgeladen und gespeichert 102.

Modul 207 enthält eine oder mehrere Prozeduren, die während der kontinuierlichen Betriebsoptimierung laufend Modellgütetests 113 durchführen, wobei die gewünschten ein oder mehrere Modellgütekriterien je Zone und/oder Gebäude frei durch den User einstellbar sein können.

Werden ein oder mehrere dieser Kriterien verletzt und liegt kein anlagentechnischer Alarm vor, kann automatisch ein Kalibrierungsjob gestartet werden, sodass die Kalibrierung auf einer Servervorrichtung durchgeführt wird. Nach Ende des Kalibrierungsjobs kann ein Kalibrierungsbericht erstellt und das Modell in die Datenbank hochgeladen werden. Es ist zum Beispiel wahrscheinlich, dass ein Projekt, das erstmalig in einer Sommerwetterlage kalibriert wurde, noch keine ausreichend kalibrierten Parameter in Heizungsanlagen enthält.

Zeiträume, in denen das Gebäudemodell und/oder Gebäudezonenmodell noch nicht gut kalibriert sind, können so automatisch erkannt und für eine Rekalibrierung 108 genutzt werden.

Nachfolgend werden weitere Vorteile und zusätzliche bevorzugte Ausführungsformen der Erfindung zusammengefasst.

Wie eingangs ausgeführt, betrifft die vorliegende Erfindung ein Verfahren und ein System zur Steuerung von Lasten in einem Gebäude. Bei der vorliegenden Erfindung kann insbesondere ein Verfahren zur automatischen Kalibrierung eines digitalen Gebäudemodells für ein Bestandsgebäude zum Einsatz kommen, wobei das digitale Gebäudemodell für die Steuerung von Lasten in einem Gebäude verwendet wird. Dieses Gebäudemodell ist dadurch gekennzeichnet, dass es physikalische Gleichungen und Parameter enthält und Raumzustände und/oder anlagentechnische Zustände auf Gebäudezonenebene dynamisch berechnen kann, wobei auf Basis vorhandener physikalischer Daten des Bestandsgebäudes, insbesondere Geometriedaten und/oder Anlagentechnikdaten ein vorparametriertes Modell als Ausgangssituation verwendet werden kann, wobei mittels Machine Learning bereits kalibrierte Modelle in einer zentralen Datenbank nach bauphysikalischen Merkmalen, insbesondere nach Geometriedaten und/oder Anlagentechnikdaten katalogisiert werden können. Dabei können beispielsweise Wertebereiche und/oder Initialwerte der Kalibrierungsparameter aus ähnlichen Gebäudemodellen und/oder Gebäudezonen und/oder ähnlichen Clustern ermittelt werden. Hierbei können die Kalibrierungsparameter innerhalb der Wertebereiche so verändert werden, dass die Genauigkeit der Modellprognosen mindestens eines Raumzustands ein oder mehrere Gütemaße im Vergleich zu aus einem Messwert oder aus mehreren Messwerten abgeleiteten Werten erfüllt, damit die Anforderungen des Raumklimakomforts einer kontinuierlichen Betriebsoptimierung erfüllt werden. Dabei können historisierte Daten mit Messdaten und optionalen Steuerdaten, optionalen Prognosedaten, optionalen Optimierungsdaten und optionalen Kalibrierungseinstellungsdaten verwendet werden, wobei ein Modell entsteht, das Steuerdaten für eine kontinuierliche Betriebsoptimierung des Raumklimas und des Energieverbrauchs sowie des Lastmanagements in Gebäuden und/oder Gebäudezonen erzeugen kann, da diese Aufgaben eine Einhaltung des Raumklimakomforts erfordern.

Die Erfindung betrifft zudem ein Verfahren zur automatischen Kalibrierung eines digitalen Gebäudemodells für ein Bestandsgebäude.

Wie vorstehend ausgeführt, ist das digitale Gebäudemodell dadurch gekennzeichnet, dass es physikalische Gleichungen und Parameter enthält und Raumzustände und/oder anlagentechnische Zustände in Gebäudezonenmodellen und/oder in einem Gesamtgebäudemodell dynamisch berechnen kann. Es ist damit geeignet, Prognosen für diese Zustände zu generieren. Damit das Modell für eine kontinuierliche Betriebsoptimierung des Raumklimas und/oder des Energieverbrauchs und/oder des Lastmanagements in Gebäuden verwendet werden kann, muss es mit Messdaten des Raumklimas aus dem Bestandsgebäude kalibriert werden, da diese Aufgaben eine Einhaltung des Raumklimakomforts erfordern. Dabei wird unterschieden, ob es sich um eine erstmalige Kalibrierung handelt oder um eine Rekalibrierung eines bereits kalibrierten Modells.

Diese Aufgabe kann manuell von Ingenieuren gelöst werden. Aus manuellen Kalibrierungen sind die Parameter bekannt, die für die Kalibrierung des Gebäudemodells verändert werden können. Diese Aufgabe manuell zu lösen ist sehr zeitintensiv, da es viele Kalibrierungsparameter in einem digitalen Gebäudemodell gibt. Als Kalibrierungsparameter werden solche Parameter bezeichnet, die von der Kalibrierung verändert werden dürfen. Kalibrierungsparameter sind beispielsweise Bauphysikdaten, Geometriedaten und/oder Anlagentechnikdaten und/oder Thermodynamikdaten, die aus Gründen der Gesamtsystemkomplexität manuell nur sequenziell verändert werden. Bauphysikdaten sind Daten des Modells, die beispielsweise Wärmekapazitäten, Wärmeleitfähigkeit oder Dichten enthalten. Geometriedaten sind Daten des Gebäudemodells, die beispielsweise Flächen und Orientierungen der Gebäude- und/oder Zonenbauteile enthalten. Das können beispielsweise Flächen von Fenstern, Wänden, Dächern, Böden sein. Anlagentechnikdaten sind Daten des Modells, die beispielsweise Nennleistungen, Betriebscharakteristiken, Materialinformationen, Medieninformationen, Typinformationen enthalten. Thermodynamikdaten sind Daten des Modells, die beispielsweise Informationen zu Wärme, Volumenstrom, Massenstrom, Druck und/oder Temperatur enthalten.

Die Aufgabe der vorliegenden Erfindung ist es daher, den Automatisierungsgrad eines bislang sehr aufwändigen Prozesses ohne Qualitätsverluste signifikant zu erhöhen.

Die Aufgabe wird gelöst durch ein Verfahren zur Steuerung von Lasten in einem Gebäude unter Verwendung einer automatischen Kalibrierung eines digitalen Gebäudemodells für ein Bestandsgebäude und kann bevorzugt die folgenden Verfahrensschritte aufweisen:
- Ermittlung von Geometriedaten und/oder Anlagentechnikdaten und/oder Thermodynamikdaten aus bereits manuell oder automatisch kalibrierten Gebäude- und/oder Zonenmodellen.
- Klassifizierung bereits vorhandener kalibrierter Gebäude- und/oder Zonenmodelle mittels maschinellem Lernen. Diese Modelle werden insbesondere nach bauphysikalischen Merkmalen und/oder nach Geometriedaten und/oder Anlagentechnikdaten klassifiziert.
- Ermittlung der Gebäude- und/oder Gebäudezonenmodell-Geometriedaten und/oder Anlagentechnikdaten aus einem vorparametrisierten Gebäudemodell, das vor dem Start der automatischen Kalibrierung auf Basis vorhandener physikalischer Daten des Bestandsgebäudes erstellt wird, das insbesondere Geometriedaten und/oder Anlagentechnikdaten enthält.
- Ermittlung des oder der zu einem digitalen Gebäudemodell eines Bestandsgebäudes ähnlichsten Gebäude- und/oder ähnlichsten Gebäudezonenmodelle und/oder Zonenmodell-Cluster. In diesem Verfahrensschritt werden die Zonen-Geometriedaten und/oder Anlagentechnikdaten des Bestandsgebäudes verwendet, um sie mittels Maschinenlernen erstellten Klassifikation zuzuordnen.
- Ermittlung von Wertebereichen der Kalibrierungsparameter und/oder Ermittlung von Initialwerten der Kalibrierungsparameter aus einem oder mehreren ähnlichen Gebäude- und/oder Gebäudezonenmodell-Clustern. Wertebereiche geben den zulässigen Bereich der Kalibrierungsparameter an. Initialwerte der Kalibrierungsparameter geben den wahrscheinlichsten Wert der Kalibrierungsparameter vor der Ermittlung der Kalibrierungsparameterwerte an.
- Vorgeben des Kalibrierungszeitraums. Der Kalibrierungszeitraum gibt Start und Ende für die Simulation des Gebäudemodells an.
- Ermitteln oder Vorgeben der veränderbaren Kalibrierungsparameter. Abhängig von der Auswahl des Kalibrierungszeitraums kann ermittelt werden, welche Parameter der Gesamtliste in diesem Zeitraum veränderbar sind.
- Ermitteln der Kalibrierungsparameterwerte für Gebäude- und/oder Zonenmodelle des Bestandsgebäudes. In diesem Verfahrensschritt werden alle als veränderbar gekennzeichneten Parameter von einem Algorithmus verändert, sodass die Modellgüte der Gebäude- und/oder Zonenmodellprognose hinsichtlich mindestens eines Raumzustands maximiert wird. Als Input aus der Datenbank können historisierte Wetterdaten und Messdaten eines Raumzustandes je Gebäude- und/oder Gebäudezonenmodell benötigt. Als Raumzustand werden beispielsweise die Größen Raumtemperatur, Raumluftfeuchte, Raumluft-CO2-Gehalt angesehen.

Zusätzlich können optional historisierte Steuerdaten und/oder Anlagenfahrpläne, optional historisierte Prognosedaten, optional historisierte Optimierungsdaten, optional historisierte Kalibrierungseinstellungsdaten verwendet werden. Bei jeder Parameterveränderung von mindestens einem Kalibrierungsparameter wird das Modell im Kalibrierungszeitraum simuliert und die Modellgüte wird ausgewertet. Als Modellgüte wird ein Maß bezeichnet, das die Genauigkeit der Modellprognosen im Vergleich zu einem abgeleiteten Messwert ausdrückt, der aus einem einzelnen Messwert oder aus mehreren Messwerten des Raumzustands und optional aus einem einzelnen Messwert oder aus mehreren Messwerten der Anlagentechnik gebildet werden kann. Aus historisierten Kalibrierungseinstellungsdaten können Parameter wie beispielsweise Abbruchkriterien übernommen werden.

Gütebewertung des kalibrierten Modells: Nach dem Abschluss der Kalibrierungsrechnung kann eine Gütebewertung über mindestens einen Schwellwert stattfinden, bei der die Entscheidung getroffen wird, ob die Modellgüte für die kontinuierliche Betriebsoptimierung zur Erzeugung von Steuerdaten für die Lasten in einem Gebäude ausreichend ist. Fällt diese Bewertung positiv aus, kann das Modell freigegeben werden. Fällt die Bewertung negativ aus, kann der Kalibrierungszeitraum verändert werden.

Im Falle einer Rekalibrierung wurde das digitale Gebäudemodell bereits mindestens einmal kalibriert. In diesem Fall wird für das Verfahren nicht ein wie vorstehend auf Basis vorhandener physikalischer Daten des Bestandsgebäudes erstelltes Modell verwendet. Im Falle einer Rekalibrierung kann das Verfahren zusätzlich den nachfolgenden Verfahrensschritt aufweisen:
- Durchführung von kontinuierlichen Modellgütetests. In diesem Verfahrensschritt werden ein oder mehrere Gütemaße laufend berechnet und mit einem oder mehreren Schwellwerten verglichen. So kann automatisch ermittelt werden, ob das Modell in bestimmten Betriebsszenarien nicht gut kalibriert ist oder insgesamt die Realität nicht mehr gut abbildet.

Gemäß einer Ausführungsform der Erfindung können die nachfolgenden Verfahrensschritte vorgesehen sein:
- Klassifizierung bereits vorhandener kalibrierter Gebäude- und/oder Gebäudezonenmodelle mittels Maschinenlernen,
- Ermittlung des oder der zu einem digitalen Gebäudemodell eines Bestandsgebäudes ähnlichsten Gebäude- und/oder ähnlichsten Gebäudezonenmodelle und/oder Gebäudezonenmodell-Cluster,
- Ermittlung von Wertebereichen der Kalibrierungsparameter und/oder Ermittlung von Initialwerten der Kalibrierungsparameter aus einem oder mehreren ähnlichen Gebäude- und/oder Gebäudezonenmodell-Clustern,
- Vorgeben des Kalibrierungszeitraums,
- Ermitteln oder Vorgeben der veränderbaren Kalibrierungsparameter,
- Ermitteln der Kalibrierungsparameterwerte für Gebäude- und/oder Gebäudezonenmodelle. Die Modellgüte der Gebäude- und/oder Gebäudezonenmodellprognose wird hinsichtlich mindestens eines Raumzustandes maximiert. Es werden mindestens historisierte Wetterdaten und mindestens Messdaten eines Raumzustandes je Gebäude- und/oder Zonenmodell verwendet, und
- Gütebewertung des kalibrierten Modells.

## Patentansprüche

1. Verfahren (10) zur Steuerung von Lasten in einem Gebäude, insbesondere von Heizungsanlagen, Klimaanlagen und Lüftungsanlagen, wobei das Verfahren die nachfolgenden Schritte aufweist:
- Ermitteln von Gebäudedaten für ein zu steuerndes Gebäude (12);
- Ermitteln von Gebäudemodellparametern für ein digitales Gebäudemodell (14); wobei das Ermitteln der Gebäudemodellparameter den Einsatz eines vorab mit Trainingsdaten trainierten Klassifikators umfasst und der Klassifikator dazu ausgelegt ist, in Abhängigkeit von den ermittelten Gebäudedaten die Gebäudemodellparameter zu bestimmten;
- Steuerung der Lasten in dem Gebäude in Abhängigkeit von dem ermittelten Gebäudemodell (16).

2. Verfahren (10) nach Anspruch 1, **dadurch gekennzeichnet, dass** das Ermitteln der Gebäudedaten das Ermitteln von Bauphysikdaten, Geometriedaten, Anlagetechnikdaten und/oder Thermodynamikdaten umfasst.

3. Verfahren (10) nach Anspruch 1 oder 2, **dadurch gekennzeichnet, dass** das Ermitteln der Gebäudedaten das Ermitteln von Thermodynamikdaten umfasst und dass das Ermitteln der Thermodynamikdaten die Messung einer Temperatur, einer Feuchtigkeit, eines Druckes und/oder eines Volumenstromes in einem Gebäudeteil umfasst.

4. Verfahren (10) nach einem der Ansprüche 1 bis 3, **dadurch gekennzeichnet, dass** das Ermitteln der Gebäudedaten das Ermitteln von Geometriedaten umfasst und dass das Ermitteln der Geometriedaten das Scannen eines Gebäudeteils und/oder die Aufnahme einer photographischen Abbildung eines Gebäudeteils umfasst.

5. Verfahren (10) nach einem der Ansprüche 1 bis 4, **dadurch gekennzeichnet, dass** der Klassifikator auf einem künstlichen neuronalen Netz und/oder einem statistischen Verfahren des Maschinellen Lernens basiert.

6. Verfahren (10) nach einem der Ansprüche 1 bis 5, **dadurch gekennzeichnet, dass** das Ermitteln der Gebäudemodellparameter das Ermitteln mehrerer Gebäudemodellparameterwerte für einen Gebäudemodellparameter umfasst und die ermittelten Gebäudeparameterwerte dazu verwendet werden, in einem vorgegebenen Zeitraum die Modellgüte des Gebäudemodells zu bestimmen.

7. Verfahren (10) nach Anspruch 6, **dadurch gekennzeichnet, dass** das Ermitteln der Gebäudemodellparameter für ein Gebäudemodell die Maximierung einer Modellgüte des Gebäudemodells hinsichtlich mindestens eines Raumzustandes für den vorgegebenen Zeitraum umfasst.

8. Verfahren (10) nach einem der Ansprüche 6 oder 7, **dadurch gekennzeichnet, dass** die Gebäudemodellparameter freigegeben werden, sofern die Modellgüte größer ist als ein vorgegebener Modellgütegrenzwert.

9. Verfahren (10) nach einem der Ansprüche 6 bis 8, **dadurch gekennzeichnet, dass** bei der Bestimmung der Modellgüte Wetterdaten und/oder Messdaten eines Raumzustandes verwendet werden.

10. System zur Steuerung von Lasten in einem Gebäude, insbesondere von Heizungsanlagen, Klimaanlagen und Lüftungsanlagen, mit
- einer Servervorrichtung umfassend eine Recheneinheit, eine Speichereinheit und ein Kommunikationsmodul; und
- einer Clientvorrichtung umfassend eine Recheneinheit, eine Speichereinheit und ein Kommunikationsmodul; wobei
- die Clientvorrichtung dazu eingerichtet ist, Gebäudedaten zu für die die Servervorrichtung bereitzustellen; und
- die Servervorrichtung dazu eingerichtet ist,
- einen Klassifikator bereitzustellen, der mit Trainingsdaten trainiert ist und dazu ausgelegt ist, in Abhängigkeit von den empfangenen Gebäudedaten mindestens einen Gebäudemodellparameter für ein digitales Gebäudemodell zu bestimmen; und
- Steuerdaten für die Steuerung der Lasten in dem Gebäude in Abhängigkeit von dem Gebäudemodell zu erzeugen und an die Clientvorrichtung zu senden.

11. System nach Anspruch 11, **dadurch gekennzeichnet, dass** die Clientvorrichtung eine Messvorrichtung zur Aufnahme von Messdaten, insbesondere zur Aufnahme einer Temperatur, einer Feuchtigkeit und/oder eines Druckes in einem Gebäudeteil oder zur Aufnahme einer photographischen Abbildung eines Gebäudeteils, aufweist.
